# EUROPEAN PATENT APPLICATION

(11) **EP 3 994 980 A1**
(43) Date of publication of application: **11.05.2022**
(21) Application number: 21275157.2
(22) Date of filing: 05.11.2021
(51) Int. Cl.: A01K 51/00, A01K 55/00

(54) **SYSTEM FOR A BEEHIVE**

(30) Priority: 05.11.2020 GB 202017508
(71) Applicant: Stach, Kevin, Newcastle-upon-Tyne, Tyne and Wear NE7 7NN (GB); Spink, John, County Durham DH3 3XA (GB)
(72) Inventor: STACH, Kevin, Newcastle-upon-Tyne, Tyne and Wear NE7 7NN (GB)
(74) Representative: Elsworth, Dominic Stephen

(57) **Abstract**

A system for delivery of a substance into a hive box of a beehive is provided. The hive box includes a wall and a plurality of comb support members mounted on the wall and the beehive has a bee space located adjacent to the comb support members, oriented in a plane substantially perpendicular to the wall. The system comprises at least one aperture aligned with the bee space and apparatus for insertion into and removal from the aperture. At least part of the apparatus is shaped to be received and held in the aperture. Apparatus for delivery of fluid into a hive box of a beehive is also provided, the hive box including a wall and a plurality of comb support members mounted on the wall, the apparatus comprising at least one opening aligned with the bee space, wherein the opening is smaller than a bee space in at least one direction.

## Description

### Field of the Invention

The present invention relates to beehives, and in particular to a system and apparatus for dosing of treatments into a hive box of a beehive.

### Background of the Invention

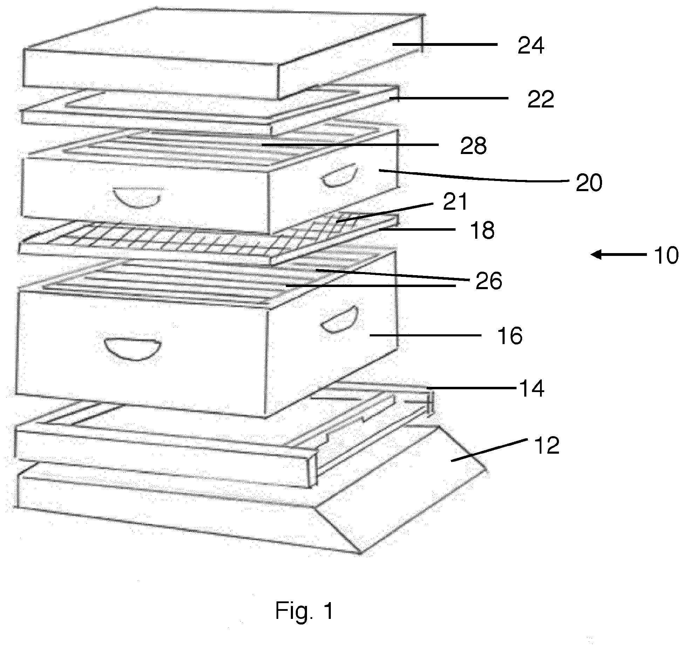

Atypical Langsroth type beehive is illustrated in Figure 1. Referring now to Figure 1, the beehive 10 comprises a hive stand 12, a bottom board 14, a hive box in the form of a brood box, 16, a queen excluder frame 18, a further hive box in the form of a honey super 20, an inner cover 22 and an outer cover 24. The brood box 16 contains a number of frames 26 onto which the bees build honeycomb. This is where the eggs, larvae and pupae develop. The honey super 20 is only usually added to the hive when the bee colony established. The honey super 20 includes a number of frames 28 onto which the bees build honeycomb to store processed nectar. A queen excluder frame 18 is typically included when a honey super 20 is added. The queen excluder frame 18 is a screen comprising a grid 21. The holes in the grid 21 are large enough to allow the worker bees to get through from the brood box 16, but small enough to exclude the larger queen bee. This prevents the queen from laying eggs inside the honey super 20. Other types of hives are also widely available, for example horizontal hives in which brood and honey frames are added horizontally, as opposed to a stacked formation.

From time to time beekeepers need to apply various treatments or feed to the bees in the beehive. For example, it may be required to treat the bees in the hive for varroa mite, or it may be necessary to feed the bees in times of low nectar flow.

Bees are often treated for varroa mite using porous boards impregnated with oils such as thymol, or using thymol containing gel materials which are introduced to the hive in a shallow tray. To introduce such boards or trays to the hives requires the hive to be dismantled, removing the roof, crown board, and supers to gain access to the brood box where the boards or trays are placed on top of the brood box frames. When treating a mite infestation, due to the life cycle of the mite in the sealed brood cells, a repeat treatment may be required a few days after the first treatment, meaning further dismantling of the hive. Each and every application of treatment requires the hive to be dismantled to gain access to the brood box, disturbing the bee colony each time. Each time the hive is taken apart it agitates the bees and forces them to clean up and rebuild areas where burr and brace comb has been broken. This has a detrimental effect on both the bees and their resources.

It would be desirable to provide an improved means for introducing treatment boards or trays into the beehive such that disturbance of the bees is kept to a minimum.

### Summary of the Invention

According to a first aspect of the invention there is provided a system for delivery of a substance into a hive box of a beehive, the hive box including a wall and a plurality of comb support members mounted on the wall, the beehive having a bee space located adjacent to the comb support members, and oriented in a plane substantially perpendicular to the wall, the apparatus comprising:
at least one aperture aligned with the bee space; and
apparatus for insertion into and removal from the aperture;
wherein at least part of the apparatus is shaped to be received and held in the aperture.

The aperture may be located in a frame. The frame may comprise a component of the beehive. The hive box may be a brood box or a super. The aperture may be incorporated into a queen excluder frame, or other beehive component that includes a frame. The frame may be adapted to be located either above or below the hive box.

Alternatively, the aperture may be incorporated into a wall of the hive box itself, aligned with a bee space. The bee space may be approximately 9mm in depth.

The comb support members may be comb frames or top bars.

The aperture may be an elongate aperture.

The system may include a stopper or plug for substantially sealing the aperture on the hive when the apparatus is not required. This prevents the bees from using the aperture as an entrance/exit point to the hive when the apparatus is not being used.

When in use, the aperture may be substantially sealed by a part of the apparatus. This prevents bees from using the aperture as an entrance/exit point to the hive whilst the bee keeper is using the apparatus to dose the hive.

The substance to be introduced into the beehive may be a treatment, for example for treating a mite infestation, or it may be a feed substance, such as sugar water, sugar fondant or a pollen substitute. The substance to be introduced might be in liquid form, gel form or solid form. Treatment for varroa mite may be in the form of a treatment board impregnated with a mite treatment. Examples of mite treatment include an acaricide or essential oils such as thymol, eucalyptus, menthol and camphor.

The apparatus may include a tray for supporting a treatment board impregnated with a mite treatment within the bee space. They tray may include a plurality of apertures to allow air flow through the treatment board. This helps essential oils or other treatment impregnated on the board to dissipate through the bee hive.

The apparatus may include a tray for supporting a substance in the form of a gel or a solid. Such a substance could be a mite treatment or a bee feed, such as a pollen patty.

The apparatus may include a tray for containing a liquid and means for attachment to a container, wherein the apparatus is configured such that the container remains on the exterior of the beehive whilst the tray of the apparatus is inserted into the aperture. The liquid may be a liquid bee feed, such as sugar water. The tray preferably includes a plurality of troughs for receiving liquid from the container.

The apparatus may include a container having an opening shaped to be received within the aperture. Such a container may be used to hold solid bee feed, such as fondant. Bees from the hive can access the solid feed in the container by crawling through the opening and into the container.

The apparatus may include a rotatable member having a channel extending therethrough and a fluid delivery conduit configured for engagement in the channel, wherein the channel is oriented in a plane substantially parallel with a plane containing the bee space and the at least one rotatable member is mounted for rotation about an axis substantially perpendicular to the plane containing the bee space, the channel having two openings, one located each side of the wall, and wherein at least a part of the fluid delivery conduit is shaped and dimensioned to pass through the channel and into the bee space.

The apparatus may include an opening shaped to receive a fluid delivery conduit. The opening has an entrance and an exit and at least one of the entrance and the exit to the opening may be beveled such that a fluid delivery conduit located within the opening is moveable within the bee space.

According to a further aspect of the invention there is provided apparatus for delivery of fluid into a hive box of a beehive, the hive box including a wall and a plurality of comb support members mounted on the wall, the beehive having a bee space located adjacent to the comb support members, and oriented in a plane substantially perpendicular to the wall, the apparatus comprising at least one opening aligned with the bee space, wherein the opening is smaller than a bee space in at least one direction.

The opening has an entrance and an exit and preferably at least one of the entrance and the exit to the aperture are beveled such that a fluid delivery conduit located within the aperture is moveable within the bee space.

The dosing apparatus may be a fluid delivery conduit. The fluid delivery conduit may be insertable directly into the aperture. The aperture has an entrance and an exit and at least one of the entrance and the exit to the aperture is preferably beveled such that a fluid delivery conduit located within the aperture is moveable within the bee space, in a plane perpendicular to the wall.

Alternatively, the dosing apparatus may include an opening shaped to receive a fluid delivery conduit. The opening may have an entrance and an exit and at least one of the entrance and the exit to the opening is preferably beveled such that a fluid delivery conduit located within the opening is moveable within the bee space, in a plane perpendicular to the wall.

According to a further aspect of the invention there is provided apparatus for delivery of fluid into a hive box of a beehive, the hive box including a wall and a plurality of comb support members mounted on the wall, the beehive having a bee space located adjacent to the comb support members, and oriented in a plane substantially perpendicular to the wall, the apparatus comprising at least one rotatable member having a channel extending therethrough and a fluid delivery conduit configured for engagement in the channel, wherein the or each rotatable member is mounted for rotation about an axis substantially perpendicular to a plane containing the bee space, and wherein the channel is oriented in a plane substantially parallel with the plane containing the bee space, the channel having two openings, one located each side of the wall, and wherein the fluid delivery conduit is shaped and dimensioned to engage with the channel for delivery of fluid into the bee space of the hive box.

The at least one rotatable member may be mounted in a wall of the hive box, or a frame above or below the hive box. In the case of a frame, the frame may be part of another hive component, such as a queen excluder, or other beehive component that includes a frame.

The fluid delivery conduit is preferably a lance. The lance may be provided by a length of substantially rigid tube, for example a stainless steel tube or a plastic tube. The lance may have a length which is at least half one of the length or width of the hive box.

Preferably, the fluid delivery conduit is provided with a nozzle at one end thereof.

The nozzle may be configured to provide a spray pattern comprising at least one fluid stream.

The nozzle may be configured to provide a plurality of distinct fluid streams.

Preferably, the nozzle is configured to provide a fluid stream in the form of a fan.

The nozzle may be configured to provide a fluid stream in the form of a mist.

The apparatus may further comprising a fluid pressurisation unit attachable to one end of the fluid delivery conduit.

The fluid pressurisation unit may be a syringe.

The fluid delivery conduit may have a handle member provided at one end thereof.

Advantageously, the fluid pressurisation unit is provided in the handle member.

Preferably, the at least one rotatable member is substantially disc shaped.

The hive box may be a brood box or a super.

The comb support members may be comb frames or top bars.

It is preferred that the rotatable member comprises an upper surface and a lower surface and a centrally located shank extending along an axis substantially perpendicular to at least one of the upper surface and lower surface, the or each shank engaging with an aperture, the at least one rotatable member rotatable about the axis.

Advantageously, the at least one rotatable member has a serrated peripheral edge.

The beehive may be any type of bee hive, for example Langsroth hives, National hives, Warre hives, top bar hives, and horizontal hives.

### Brief Description of the drawings

In the Drawings, which illustrate the prior art and preferred embodiments of a system for delivery of a substance into a hive box of a beehive of the invention, and are by way of example:
Figure 1 illustrates a prior art beehive;
Figure 2a illustrates a perspective view of a hive frame and a first example of the system of the invention;
Figure 2b illustrates part of the frame of Figure 2a with the apparatus of the invention inserted into the aperture on the frame;
Figure 3 illustrates a stopper for closing the aperture on the frame;
Figure 4 illustrates a perspective view of a system for dosing fluids into a hive;
Figure 5 illustrates a plan view of a queen excluder frame incorporating an aperture housing, with the apparatus of Figure 4 in place within the aperture;
Figure 6a illustrates a front perspective view of a system for dosing solid feeds into a hive;
Figure 6b illustrates a rear perspective view of the system of Figure 6a;
Figure 6c illustrates an exploded view of the apparatus of Figure 6a;
Figure 7a illustrates a front perspective view of an alternative system for dosing fluids into a hive;
Figure 7b illustrates a rear perspective view of the system of Figure 7a;
Figure 8a illustrates an alternative system for dosing fluids into a hive box;
Figure 8b illustrates the system of Figure 8a in use, with a fluid lance inserted therethrough;
Figure 9a illustrates an apparatus for dosing fluids into a hive box, the apparatus incorporated directly into the hive box or frame;
Figure 9b illustrates an alternative apparatus for doing fluids into a hive box, the apparatus incorporated directly into the hive box or frame;
Figure 9c illustrates a further alternative apparatus for doing fluids into a hive box, the apparatus incorporated directly into the hive box or frame;
Figure 10a illustrates a perspective view of a hive box incorporating an alternative apparatus of the invention;
Figure 10b is an exploded view of the hive box of Figure 7a;
Figure 10c is an underneath perspective view of the hive box of Figure 7a;
Figure 11 a is a front view of the hive box of Figure 10a;
Figure 11b is cross-sectional view taken along the line A-A of Figure 11a;
Figure 12a illustrates part of the apparatus of Figure 10a in a first position;
Figure 12b illustrates the part of the apparatus of Figure 12a rotated to a second position;
Figure 12c illustrates the part of the apparatus shown in Figure 12a with a fluid lance inserted therethrough;
Figure 12d illustrates the part of the apparatus shown in Figure 12b with a fluid lance inserted therethrough rotated to a second position;
Figure 12e illustrates the part of the apparatus shown in Figure 12a with a fluid lance partially inserted therethrough;
Figure 12f illustrates the part of the apparatus shown in Figure 12b with a fluid lance partially inserted therethrough;
Figure 13a illustrates a fluid spray nozzle suitable for use with the system and apparatus of the invention;
Figure 13b illustrates an alternative fluid spray nozzle suitable for use with the system and apparatus of the invention;
Figure 13c illustrates a spray pattern of a fluid spray nozzle suitable for use with the system and apparatus of the invention;
Figure 13d illustrates a spray pattern of an alternative fluid spray nozzle suitable for use with the system and apparatus of the invention;
Figure 13e illustrates a further alternative fluid spray nozzle suitable for use with the system and apparatus of the invention.
Figure 14a illustrates a front view of a queen excluder frame incorporating the apparatus of the invention;
Figure 14b is cross-sectional view taken along the line B-B of Figure 14a; and
Figure 14c is a perspective view of the queen excluder frame and hive box of Figure 14a.

### Detailed Description of the Preferred Embodiments

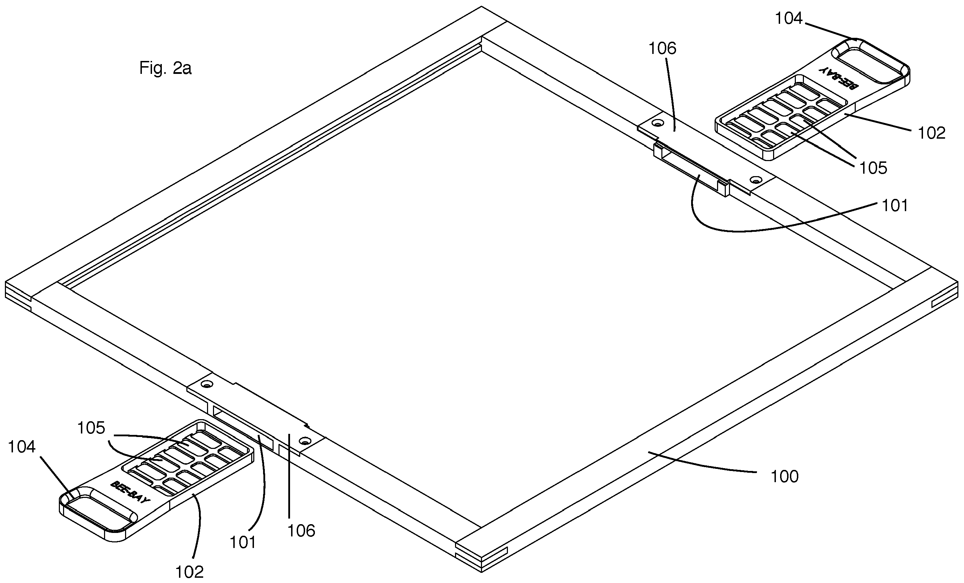

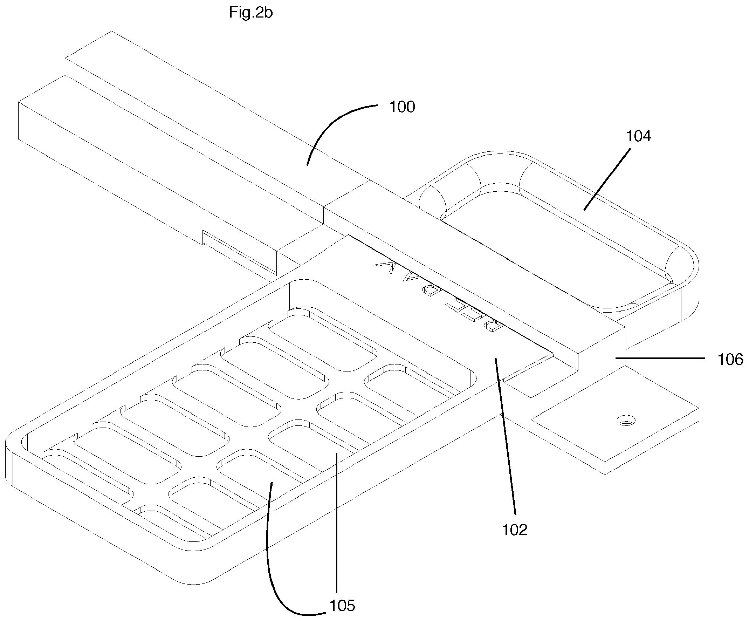

Referring now to Figures 2a and 2b, there is illustrated a first example of apparatus for the delivery of a substance into a beehive. In this example, a frame 100, for example a queen excluder frame, is provided with an aperture 101 which is shaped to accommodate apparatus in the form of a tray 102. As illustrated, the aperture 101 is preferably elongate.

Queen excluder frames are traditionally made of wood with four rails jointed together at the corners and in this example apertures are located in two opposing side rails.

A hive box typically includes a bee space at either the top or the bottom of the hive box. A bee space is a crawl space that bees need to pass easily between two structures. The bees respect such spaces and leave them free as passageways. If the space between two surfaces is much less than the bee space then the bees tend to seal the gap with propolis. If the space between to surfaces is much larger than the bee space then the bees tend to fill the gap with extra wax comb. The hive box 100 must therefore include a bee space either above the frames or below the frames. Bee space is typically between around 5mm and 9mm. The queen excluder frame 100 is located adjacent to the bee space so that the aperture 101 allows access to the bee space.

The apparatus in this example is a tray 102. The tray 102 is shaped to fit closely into the aperture 101. The tray 102 may have a slightly enlarged end 104 which serves to ensure that the aperture 101 is sealed to the bees once the tray 102 is in position inside the hive and also provides a handle that can be easily grasped by the beekeeper. Since the aperture 101 is located adjacent to the bee space, the tray 102 can be slid into the bee space of the hive box, as illustrated in Figure 2b. The tray 102 preferably includes a plurality of openings 105 which allow air to flow through the tray 102. The tray 102 is shaped to support a treatment board or strip impregnated with a treatment, such as thymol oil as a varroa mite treatment. Treatment boards are typically left inside the hive for several weeks. Thymol is volatile and sublimates into the air, helped by air flow through the openings 105.

The tray 102 may be provided without openings so as to be able to receive a treatment in the form as a gel or crystals rather than an impregnated board. Such a tray could also be used to introduce feed in solid form, such as fondant or pollen patties.

The aperture 101 could also be located on the hive box itself, rather than on a separate frame, provided that it is adjacent to the bee space.

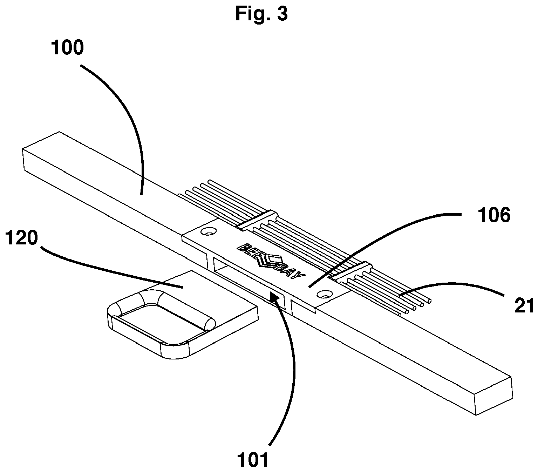

A stopper 120, or blanking plate or plug shaped to fill the aperture 101 is typically inserted into the aperture 101 when the apparatus is not being used. An example is illustrated in Figure 3. This prevents the bees from using this aperture as an entry or exit point from the hive box.

The aperture 101 may simply be cut into the wood of the hive box or queen excluder frame. Alternatively, an aperture housing 106, for example made of plastic, may be incorporated into the hive box or frame. This is preferable since wood can swell which means that the size of the aperture may change. In the example illustrated in Figure 2a, the aperture housing 106 is mounted between two battens making up one side of the frame 100.

Typically, the aperture is located on a side of the hive away from the entrance so that it can be used without disturbing the bees and without the beekeeper having wear full protective clothing.

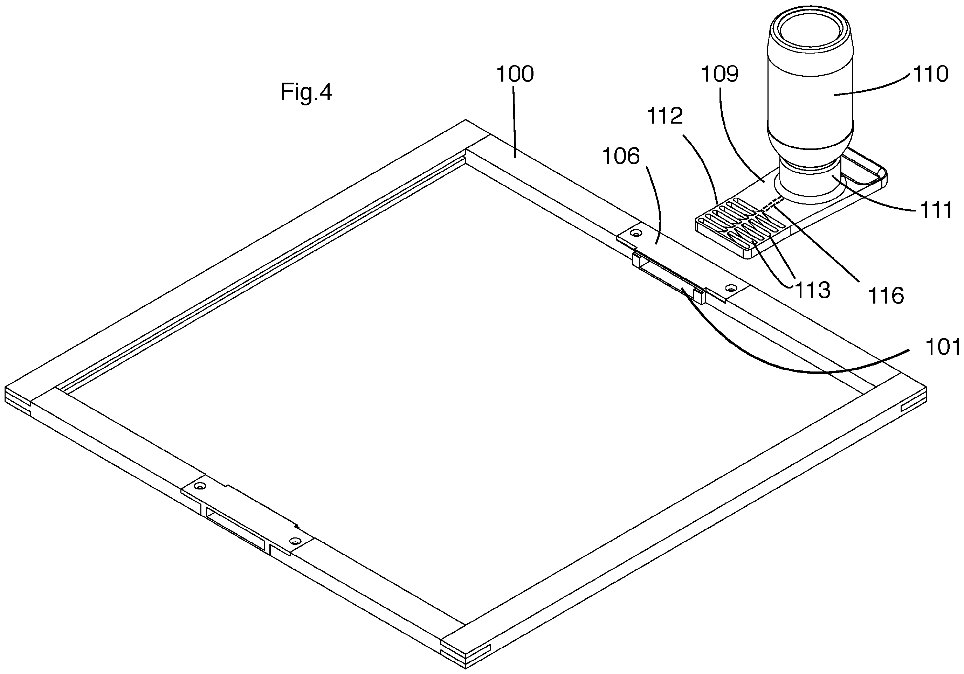

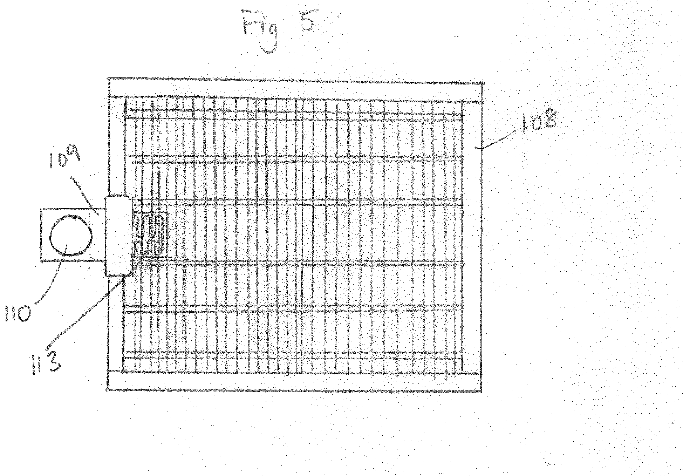

The apparatus may also be used to dose liquids into the beehive, for example sugar water to feed the bees. An example of an apparatus for dosing liquids is illustrated in Figure 4. In this example the apparatus 109 includes means for attachment of a bottle of feed 110, for example a neck 111 where the bottle and the neck are provided with complementary screw threads. The apparatus includes a tray part 112 provided with a number of troughs 113 for receiving the liquid feed from the bottle. There is a channel 116 within the body of the tray (shown in dotted lines) to provide a fluid connection between the neck of the bottle and the troughs. When in use the tray part 112 is inserted into the aperture 101 and the bottle 110 remains outside of the hive. Liquid from the bottle is dispensed into the troughs 113 on the tray and the bees feed from the troughs. Figure 5 shows a plan view of a liquid dispensing apparatus in situ within an aperture located on a queen excluder frame.

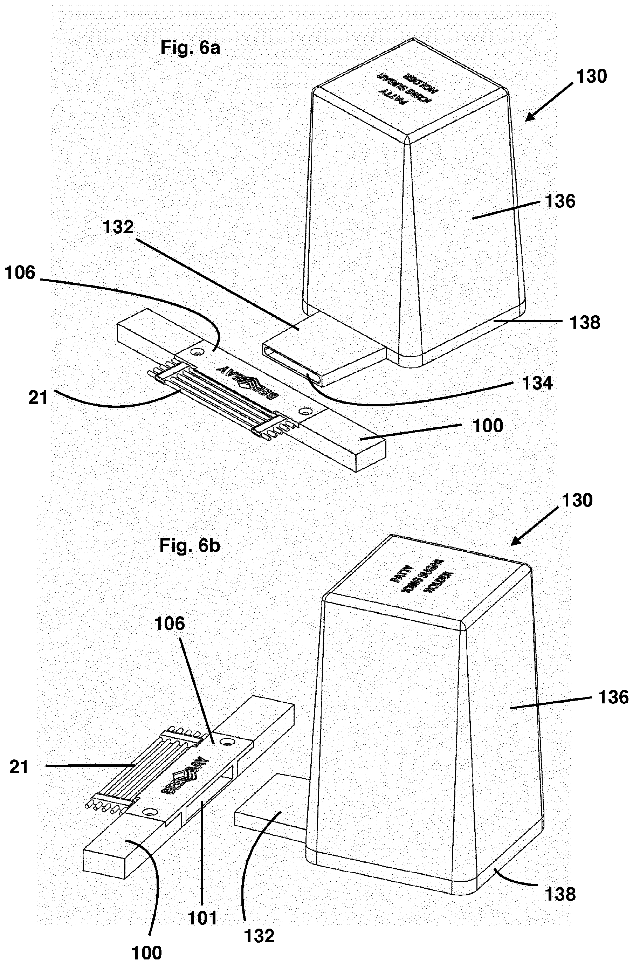

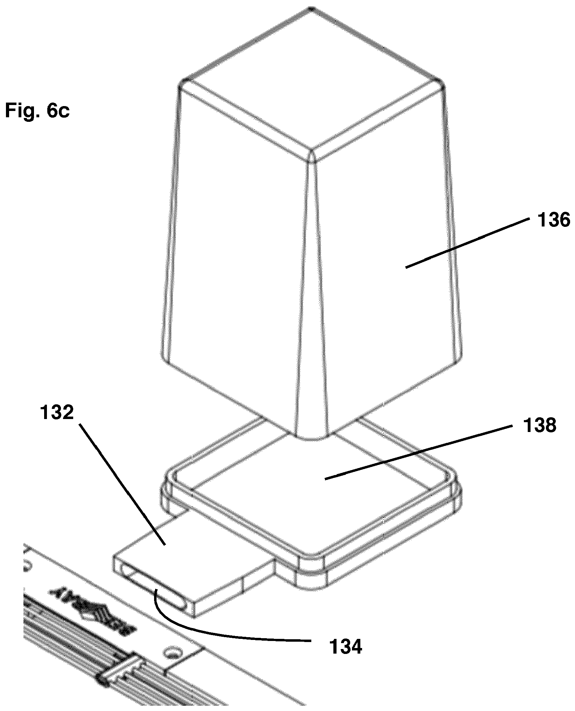

Figure 6a and 6b illustrate a container 130 for feeding fondant to the bees in a bee hive. The apparatus comprises a feeder container 130 made up of a hollow upper part 136 and a base 138 which fit together as shown in Figure 6c. The opening 134 to the container protrudes from the base, and the protruding part 132 is shaped to fit into the aperture 101 in the hive box or queen excluder frame 100. The protruding part 132 of the container has an opening 134 which is sized such that bees can crawl through the opening 134 to reach solid fondant bee feed held within the container 130. The container 130 remains on the outside of the hive.

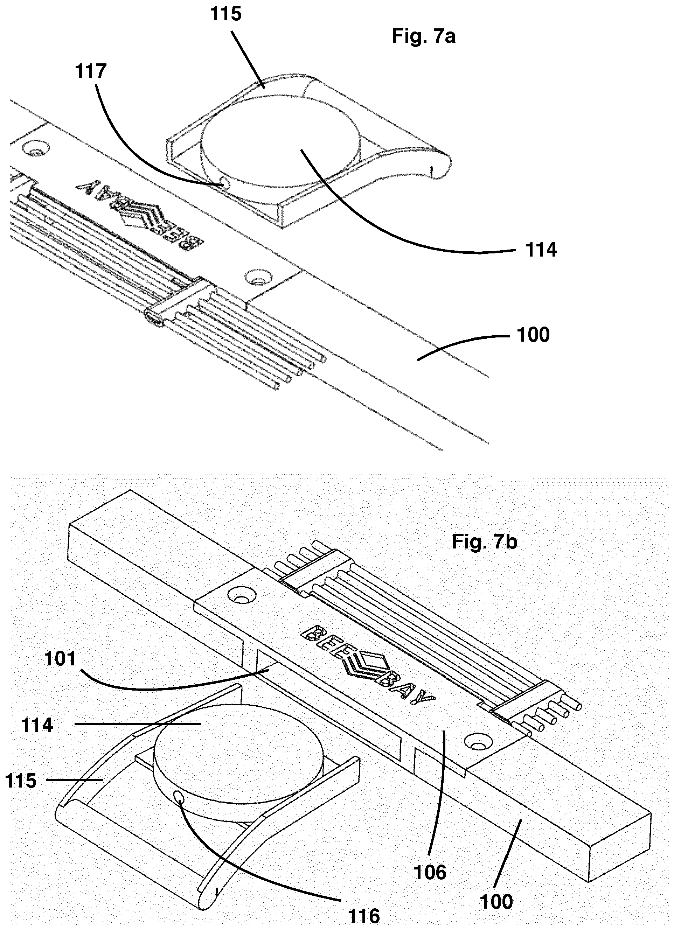

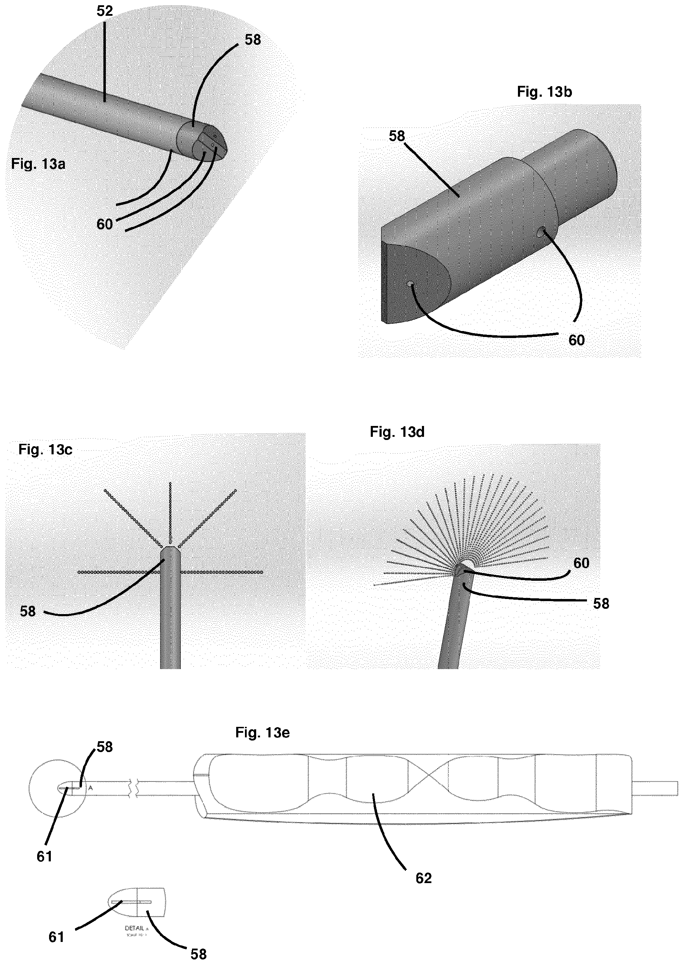

Figures 7a and 7b illustrate an alternative apparatus that may be used to dose liquids into the beehive. In this example a rotatable member, in the form of a disc 114 is incorporated into a modified apparatus 115 which can be inserted into the aperture 101 in the hive. The disc 114 has a channel running through it, the channel having a first opening 116 which in use is located outside of the hive box 30 and a second opening 117 which in use is located inside the beehive. The channel within the disc 114 allows a pipe or fluid lance, with a diameter less than the diameter of the channel, to be inserted through the opening 116 of the channel 116, and into the bee space via the second opening 117. Fluid can be then introduced to the inside of the hive box through the channel in the disc 114 without having to dismantle the hive. The disc 114 can be rotated allowing larger areas of the hive to be sprayed with fluid from the nozzle of a fluid lance. Examples of suitable fluid lance nozzles are described later in relation to Figures 13a to d.

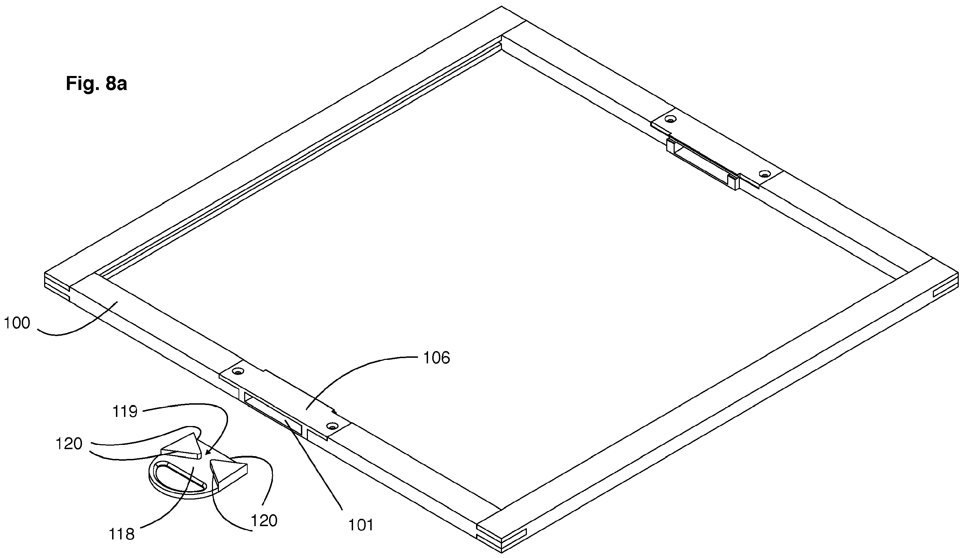

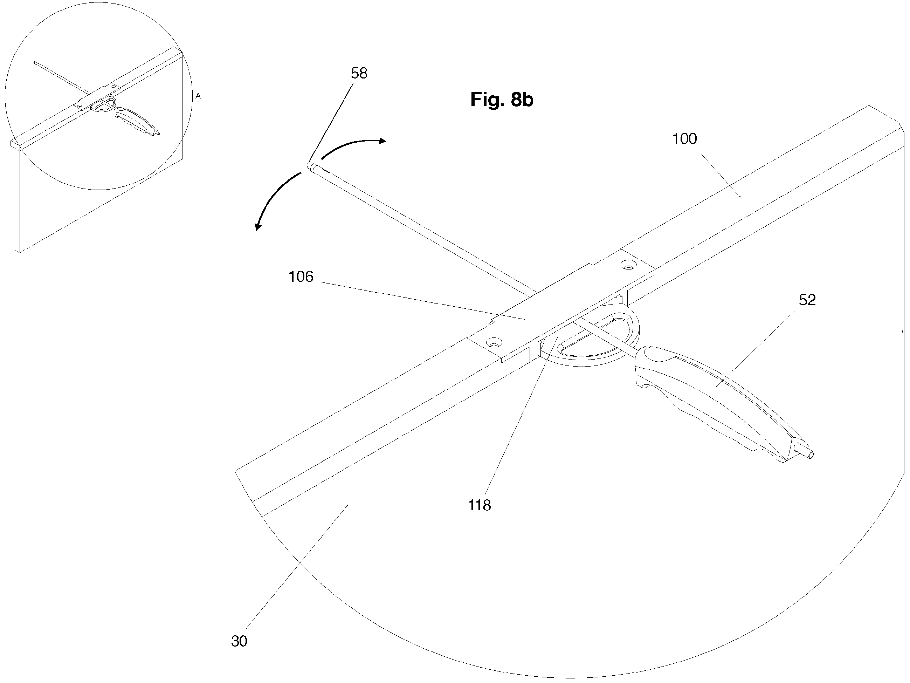

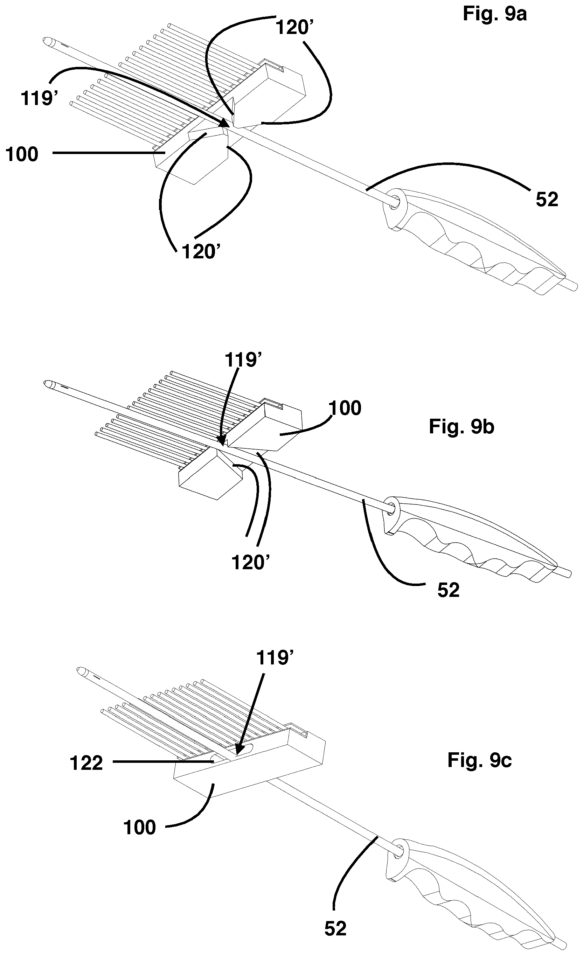

Figure 8a illustrates a further alternative apparatus that may be used to dose liquids into the beehive. In this example, the apparatus 118 inserted into the aperture 101 includes a small opening 119 large enough to allow a fluid lance 52 to be inserted therethrough as shown in Figure 9, but not large enough for a bee to travel through. Adjacent to the opening 119 the edges 120 leading up and away from the opening are beveled, allowing a lance inserted through the opening to be moved through the plane of the bee space as shown by the arrows in Figure 8b. In Figure 8b the apparatus is shown incorporated into a queen excluder frame 100 located on top of a hive box 30, which may be a brood box.

Figures 9a, 9b and 9c illustrate variants of the apparatus described in conjunction with Figure 8a. In this variant an opening for a fluid lance is incorporated into the hive box itself, or directly into the queen excluder frame. This avoids the requirement for a separate aperture into which the fluid lance apparatus is inserted.

In Figure 9a, a queen excluder frame 100 incorporates a small opening 119' large enough to allow a fluid lance 52 to be inserted therethrough as shown in Figure 9, but not large enough for a bee to travel through. Adjacent to the opening 119'the edges 120' leading up and away from the opening are beveled, allowing a lance inserted through the opening to be moved through the plane of the bee space. Figure 9b illustrates a variant in which only the edges leading up to the opening 119' are beveled. And in Figure 9c, the opening 119' is in the form of a slot 122.

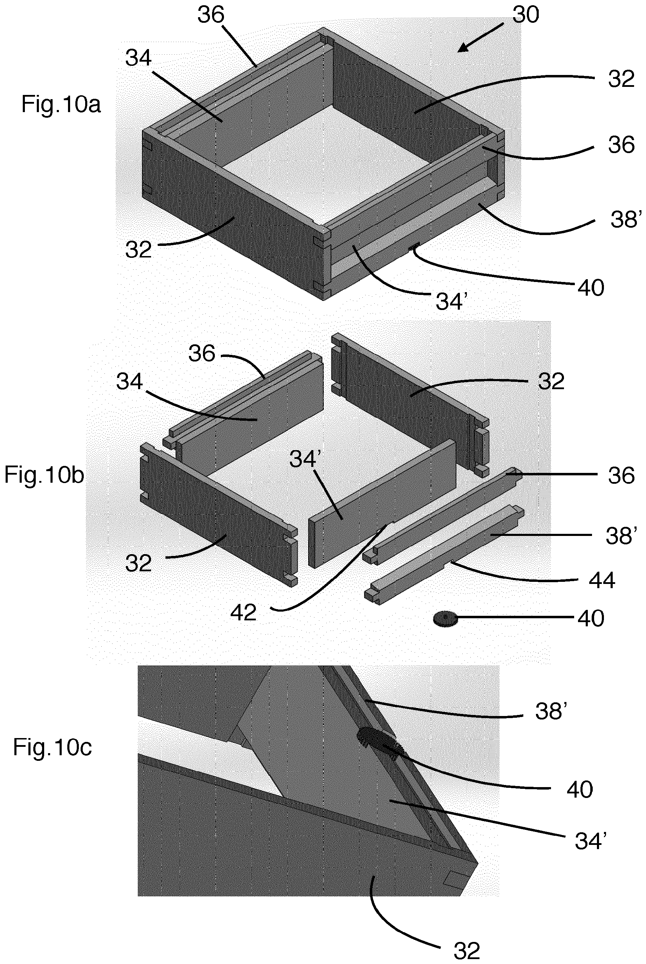

Referring now to Figures 10a to 10c, there is illustrated another example of apparatus for introducing fluid into the beehive. In this example, the apparatus is incorporated into a side wall of a hive box 30, which could be used as a brood box or a honey super. The hive box 30 typically comprises a first pair of side panels 32, and a second pair of side panels 34, 34'. Hive boxes 30 are traditionally made of wood and the four side panels are joined together at the corners, for example using a box jointing method. A pair of top side rails 36, and a pair of bottom side rails 38, 38' may also be used in the construction of the hive box 30. A hive box 30 typically includes a bee space at either the top or the bottom of the hive box. A bee space is a crawl space that bees need to pass easily between two structures. The bees respect such spaces and leave them free as passageways. If the space between two surfaces is much less than the bee space then the bees tend to seal the gap with propolis. If the space between to surfaces is much larger than the bee space then the bees tend to fill the gap with extra wax comb. The hive box 30 must therefore include a bee space either above the frames or below the frames. Bee space is typically between around 5mm and 9mm. In the hive box 30 illustrated in Figure 10a the bee space is located at the bottom of the box, beneath the frames when the frames are in position (not shown here). The hive box 30 has a rotatable member, in the form of a disc 40, incorporated at the bottom of one of the side panels 34'. The disc 40 is located approximately midway along the bottom of the side panel 34'. Figure 10b illustrates an exploded view of the hive box of Figure 10a, showing the various components making up the box, and Figure 10c is a view of the underside of the hive box 30. In this example, one of the side panels 34' has been modified to include a cutaway area 42, and one of the bottom side rails 38' has been modified to include a cutaway area 44. This allows for insertion of the disc 40 into the bottom of the wall of the hive box 30. Any type of hive box construction could be modified to include a similar rotatable disc 40 in one of the walls. As shown in Figure 10c, the disc 40 may have a serrated outer circumference which makes it easier to grip for manual rotation.

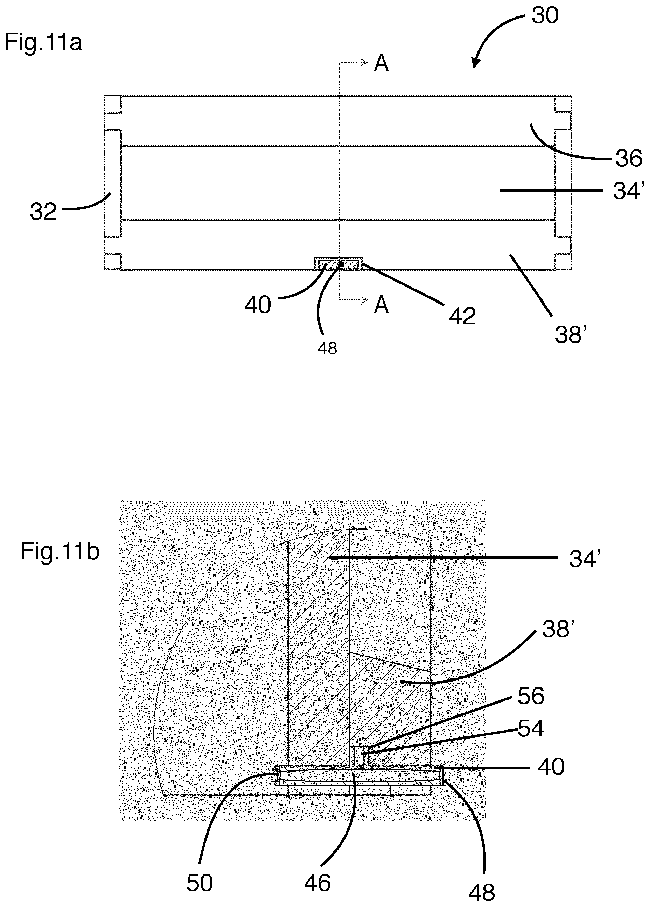

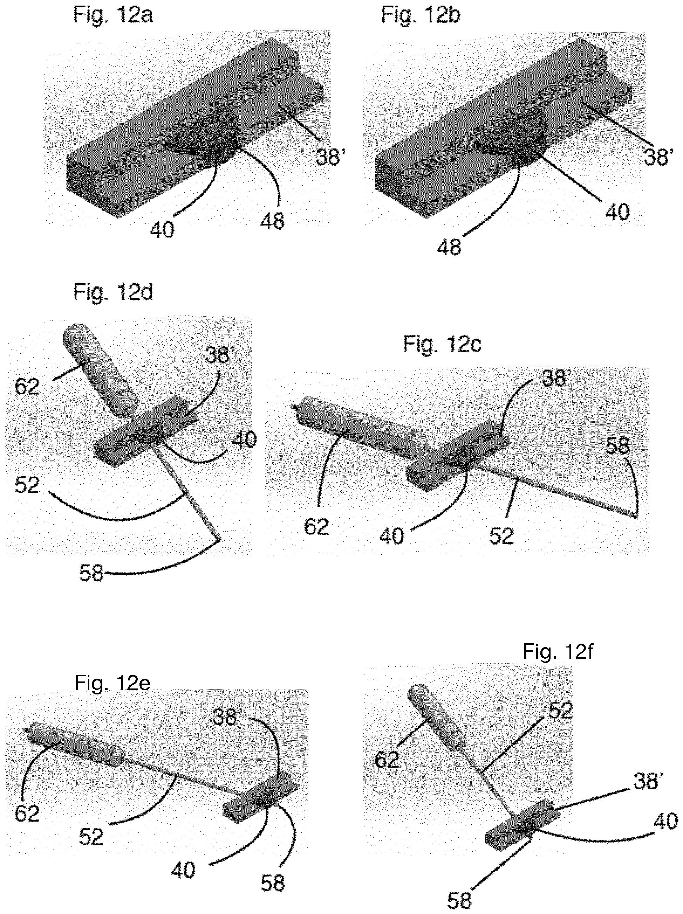

Figure 11a is a front view of the hive box 30 of Figure 10a, and Figure 11b illustrates a cross section through the line A-A. As shown in Figure 11b, the disc 40 includes a channel 46 therethrough, the channel 46 having a first opening 48 to the outside of the hive box 30 and a second opening 50 to the inside of the hive box. This allows a pipe or fluid lance 52 (see Figures 12c to 12f) to be inserted through the channel 46, and into the bee space, which in this hive box is located at the bottom of the hive box. A fluid lance, or other fluid delivery pipe, must have a diameter that is smaller than the bee space to allow the lance 52 to be introduced into the hive. Preferably the lance comprises a stainless steel with a spray nozzle 58 at the end. Fluid can be then introduced to the inside of the hive box 30 through the channel 46 without having to dismantle the hive. The disc 40 has a shank 54 extending from its upper surface, the shank engaging with a recess 56 in one of the bottom side rails 38'. This allows the disc 40 to be rotated.

If the bee space of the hive box is at the top of the box, then the configuration is reversed, such that the rotatable member is located at the top of the hive box side panel 48'. The hive box could be used as either a brood box or a honey super in either configuration.

The hive box 30 illustrated in Figures 10a to 10c may be a honey super, located above a brood box. In this configuration, introducing fluid through the disc 40 at the bottom of the honey super allows gravity to aid the distribution of fluid towards the bees in the brood box located below. Alternatively, the hive box 30 illustrated in Figures 10a to 10c may be a brood box. In this configuration fluid from the lance would need to be sprayed in an upwards direction in order to reach the bees in the brood box.

As shown in Figures 12a and 12b, as the disc 40 is rotated the orientation of the channel 46 within the disc changes and the position of the openings 48, 50 of the channel are altered. As shown in Figures 12c to 12f, when a fluid lance 52 is inserted into the channel 46 in the disc 40, the disc 40 may be rotated to allow larger areas of the hive to be sprayed with fluid from the nozzle 58 of the fluid lance 52. The lance can also be inserted at different depths to target different areas of the hive, as shown in Figure 12c compared to Figure 12f. The fluid lance 52 may contain a source of fluid, for example the handle 62 of the fluid lance may contain a fluid reservoir. Alternatively, the fluid lance 52 may be connectable to a separate source of fluid (not shown).

The fluid lance 52 preferably includes a spray nozzle 58. A variety of spray patterns may be obtained by varying the spray nozzle. Figures 13a to 13e illustrate different spray nozzles 58 with differing numbers and orientations of spray holes 60, or slits 61 thereon. Figures 13c and 13d illustration potential spray patterns for two examples of spray nozzle 58. The spray nozzle 58 preferably provides a fan-shaped spray and/or a misting spray. Preferably the spray nozzle 58 is an interference fit onto the end of the fluid lance 52. In the example illustrated in Figure 13e, the spray nozzle has a closed end and is provided with an elongate slit 61, meaning that fluid is sprayed from the lance in a narrow band on the axis of the slit 61. Such a nozzle can provide better penetration of fluid between the frames of the hive.

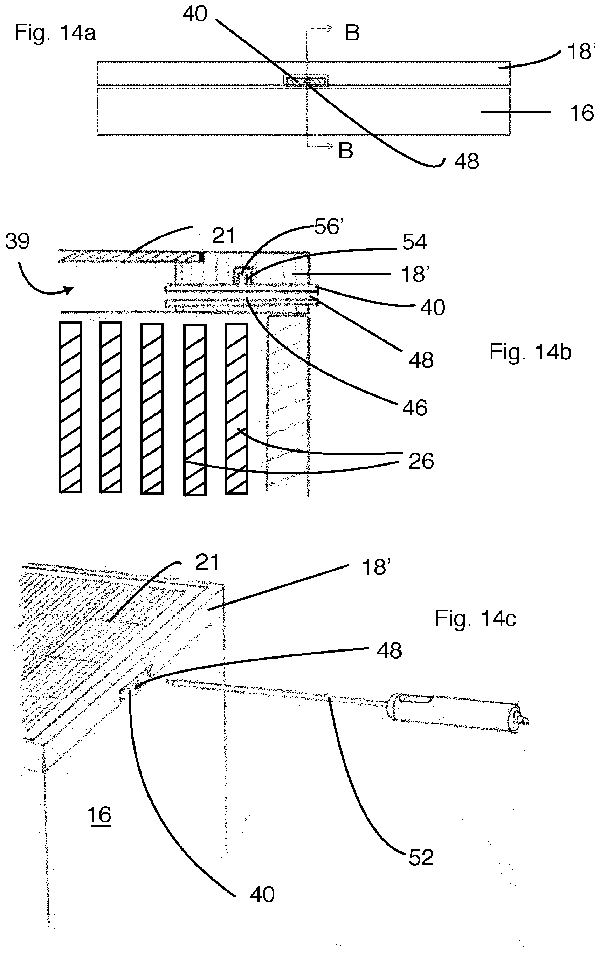

When liquid feed or treatments are added to the hive, they are usually added to the brood box 16. In the example illustrated in Figures 14a to 14c the apparatus for introducing fluid is incorporated into a queen excluder frame 18', rather than the hive box. The queen excluder frame 18' is modified to include a rotatable member, in the form of a disc 40. Figure 14a is a front view of a modified queen excluder frame 18', located above a brood box 16. Figure 14b illustrates a cross section through the line B-B. As illustrated in Figure 14a, the disc 40 is located approximately midway along one side of the outer edge of the queen excluder frame 18', and is oriented substantially parallel to the base of the hive 10, when in situ. As shown in Figure 14b, and as discussed in relation to the previous embodiment, the disc 40 includes a channel 46 therethrough, the channel 46 having a first opening 48 to the outside of the hive and a second opening 50 to the inside of the hive. As shown in Figure 14c, this allows a fluid lance 52 to be inserted through the channel 46, and therefore fluid can be introduced to the inside of the hive 10 through the channel 46 without having to dismantle the hive. There is a bee space 39 between the top of the frames 26 of the brood box 16 and the grill 21 of the queen excluder frame 18'. The disc 40 has a shank 54 extending from its upper surface, and the shank engages with a recess 56' in the queen excluder frame 18', allowing the disc 40 to rotate. As shown previously in Figures 12a to 12f, as the disc is rotated the position of the openings of the channel change allowing the fluid lance to be moved around inside the bee space 39.

## Claims

1. A system for delivery of a substance into a hive box of a beehive, the hive box including a wall and a plurality of comb support members mounted on the wall, the beehive having a bee space located adjacent to the comb support members, and oriented in a plane substantially perpendicular to the wall, the system comprising:
at least one aperture aligned with the bee space; and
apparatus for insertion into and removal from the aperture;
wherein at least part of the apparatus is shaped to be received and held in the aperture.

2. A system according to Claim 1, the beehive further comprising a frame, wherein the at least one aperture is located in the frame, and wherein the frame is adapted to be located on top of or below the hive box.

3. A system according to Claim 1, wherein the at least one aperture is smaller than a bee space in at least one direction.

4. A system according to Claim 2 or 3, wherein the frame forms part of a queen excluder.

5. A system according to Claim 1, wherein the at least one aperture is mounted in or adjacent to the wall of the hive box and aligned with one of: a bee space located above the comb support members and a bee space located below the comb support members.

6. A system according to any preceding claim, wherein in use, the aperture is substantially sealed by a part of the apparatus.

7. A system according to any preceding claim, wherein the aperture is an elongate aperture.

8. A system according to any preceding claim, further comprising a stopper shaped to close the aperture when the apparatus is absent from the aperture.

9. A system according to any preceding claim, wherein the apparatus includes a tray and wherein the tray: is adapted to support a treatment board impregnated with a bee treatment; includes a plurality of apertures to allow air flow through the tray; is shaped to receive a treatment in the form of a gel; or is adapted to contain a liquid and includes means for attachment to a container.

10. A system according to Claim 9, wherein the apparatus configured such that the container remains on the exterior of the beehive whilst the tray of the apparatus is inserted into the aperture.

11. A system according to claim 10, wherein the tray includes a plurality of troughs for receiving liquid from the container.

12. A system according to any of claims 1 to 9, wherein the apparatus includes a container, the container having an opening shaped to be received within the aperture.

13. A system according to any preceding claim, wherein the apparatus includes a rotatable member having a channel extending therethrough, and a fluid delivery conduit configured for engagement in the channel; wherein the channel is oriented in a plane substantially parallel with a plane containing the bee space and the at least one rotatable member is mounted for rotation about an axis substantially perpendicular to the plane containing the bee space, the channel having two openings, one located each side of the wall, and wherein at least a part of the fluid delivery conduit is shaped and dimensioned to pass through the channel and into the bee space.

14. A system according to any of claims 1 to 12, wherein the apparatus includes an opening shaped to receive a fluid delivery conduit.

15. A system according to Claim 14, wherein the opening has an entrance and an exit and at least one of the entrance and the exit to the opening are beveled such that a fluid delivery conduit located within the opening is moveable within the bee space.
